(19) **Europäisches Patentamt**

**European Patent Office**

**Office européen des brevets**

(11) **EP 0 649 731 B1**

(12) **EUROPEAN PATENT SPECIFICATION**

(45) Date of publication and mention
of the grant of the patent:
**26.04.2000 Bulletin 2000/17**

(51) Int. Cl.⁷: **B29D 31/00**, B29C 70/04,
B29C 37/00

(21) Application number: **94116489.9**

(22) Date of filing: **19.10.1994**

(54) **Plastic-made reinforced structure**

Verstärkte Struktur aus Kunststoff

Structure renforcée en polymère

(84) Designated Contracting States:
**DE FR GB IT**

(30) Priority: **21.10.1993 JP 26350593**

(43) Date of publication of application:
**26.04.1995 Bulletin 1995/17**

(73) Proprietor:
**SUMITOMO CHEMICAL COMPANY LIMITED
Osaka-shi, Osaka 541-0041 (JP)**

(72) Inventors:
• **Togawa, Yoshiaki**
  **Ichihara-shi (JP)**
• **Matsumoto, Masahito**
  **Ibaraki-shi (JP)**
• **Nagata, Makoto**
  **Ichihara-shi (JP)**
• **Yabe, Tohru**
  **Ichihara-shi (JP)**

(74) Representative:
**VOSSIUS & PARTNER
Siebertstrasse 4
81675 München (DE)**

(56) References cited:
**EP-A- 0 158 234**          **EP-A- 0 512 431**
**WO-A-93/04858**          **FR-A- 2 325 503**
**US-A- 4 601 936**

## Description

The present invention relates to a plastic-made reinforced structure which is lightweight and yet has excellent strength.

Plastic plates have been in wide use as a structural material for various applications, owing to their light weight and excellent physical properties. They, however, are inferior in static or impact strength when used in the form of a flat plate; in order to reinforce the strength, rib(s) are often bonded to the surface of the plate. As typical examples of the rib(s)-bonded plate, there are known reinforced structures comprising (a) a plate and (b) continuous or independent rectangular box-shaped or honeycomb-shaped ribs bonded to the plate surface. FR-A-2 325 503, for example, discloses such reinforced structures.

In recent years, these reinforced structures have been required to be lightweight. Reduction in amount of rest used for the rib portion in order to achieve light weight, however, results in a reinforced structure of low strength because the amount of resin used for the rib portion is approximately proportional to the static and impact strength of the reinforced structure. Thus, it has been an important task to develop a reinforced structure of light weight without reducing its strength.

It is an object of the present invention to develop a plastic-made reinforced structure which is free from the problems of conventional plastic-made reinforced structures and wherein the amount of resin used for the rib portion is reduced for a light weight and yet the strength is the same as or even higher than those of conventional plastic-made reinforced structures.

This object is achieved by the present invention which provides a plastic-made reinforced structure comprising a thermoplastic resin-made plate and cylindrical rib(s) made of the same resin as that of said plate, connected to at least one side of said plate perpendicularly to the side so that the plate and the rib(s) form one piece, in which structure the following relationships hold:

$$d_1 \geq 20 \text{ mm},$$

$$1 > d_1/d_2 \geq 0.7,$$

$$H \geq 30 \text{ mm, and}$$

$$1 \geq d_1/H \geq 0.3$$

wherein $d_1$ and $d_2$ are the inside and outside diameters of each rib at the root of the rib, i.e. the joint of the rib to the plate; and H is the length of each rib from the root to the front end.

Fig. 1 shows a plastic-made reinforced structure having cylindrical ribs, according to the present invention. In Fig. 1, A is a top plate and B is individual cylindrical ribs.

Fig. 2 shows the sectional view of each rib of the structure of Fig. 1. In Fig. 2, each number indicates a length (mm); $d_1$ and $d_2$ are the inside and outside diameters of each rib at the root of each rib, i.e. the joint of the rib to the plate; and H is the length of each rib from the root to the front end.

Fig. 3 shows a plastic-made reinforced structure having box-shaped ribs. In Fig. 3, A is a top plate and B is individual box-shaped ribs.

The present invention is described in detail below.

In the plastic-made reinforced structure of the present invention, the base material is a thermoplastic resin. The thermoplastic resin is exemplified by polyethylene, polypropylene, polyvinyl chloride, nylon, polycarbonate, polyethylene terephthalate, PMMA, ABS resin, modified resins thereof, polymer alloys, mixtures between one of said resins and a rubber component (e.g. thermoplastic elastomer typified by EPDM), and mixtures thereof. Among these resins, preferable are polyolefin resins such as homopolymers of ethylene, propylene, etc. or copolymers of said monomer and other copolymerizable component, and particularly preferable is a polypropylene resin.

Such a thermoplastic resin as the base material may be mixed with a fiber (e.g. glass fiber, carbon fiber or polyamide fiber) and a filler (e.g. talc) as necessary. Needless to say, to the resin may be added various additives ordinarily used, such as an antioxidant, ultra-violet absorber, flame retardant and coloring agent.

The plastic-made reinforced structure of the present invention uses the above-mentioned thermoplastic resin as the base material, and comprises a thermoplastic resin-made plate and cylindrical rib(s) connected to at least one side of the plate perpendicularly to the plate surface so that the plate and the rib(s) form one piece. It is requisite that the thermoplastic resin-made plate which is the base of the structure (said plate is hereinafter referred to simply as base plate, in some cases) and the cylindrical rib(s) for reinforcement are both made of the same material and that the base plate and the cylindrical rib(s) are connected so as to form one piece. The plastic-made reinforced structure of the present invention is produced by a method which comprises forming a base plate and rib(s) simultaneously in one piece, for example, a press-molding method which comprises feeding a molten thermo-plastic resin into between male and female dies each designed in a given shape and then clamping the dies or conducting feeding and clamping simultaneously, and an injection-molding method which comprises injecting a molten resin into a die. Any structure produced by bonding a base plate and rib(s) separately prepared, by fusion or with an adhesive is inferior in mechanical strengths and is not included in the plastic-made reinforced structure of the present invention.

In the plastic-made reinforced structure of the present invention, the shape of the base plate can be selected freely so as to best meet the application purpose of the structure. The base plate may have a flat surface or a curved surface and its shape is determined entirely depending upon the application purpose of the structure.

The cylindrical rib(s) is (are) generally connected to one side of the base plate but, depending upon the application purpose of the structure or as any necessity arises, may be connected partially to both sides of the base plate.

In the present plastic-made reinforced structure, it is requisite that the cylindrical rib(s) is (are) connected to the base plate so that the lengthwise direction of rib(s) are perpendicular to the surface of the base plate.

Herein, "perpendicular to the surface of the base plate" means the followings. That is, when the surface of the base plate is a flat surface, said expression means that the lengthwise direction of each rib intersects the flat surface at right angles; and when the surface of the base plate is a curved surface, said expression means that the lengthwise direction of each rib is normal to the curved surface, or intersects the tangent of the curved surface with which each rib contacts, at right angles.

In the above, "perpendicular" need not be very strict and may deviate from true "perpendicular" as long as the strength of the structure is not greatly impaired.

In the present plastic-made reinforced structure, it is a very important requirement that the rib(s) bonded to the base plate has (have) a cylindrical shape.

Herein, "cylindrical rib" refers to a hollow rib whose cross-section intersecting the lengthwise direction of rib at right angles has a double-circle shape. These circles are preferably true circles but may slightly deviate therefrom to, for example, an oval as long as the strength of the structure is not greatly impaired.

In the present plastic-made reinforced structure, the relationships between the size and thickness of each rib is very important. That is, the following relationships must hold:

$$d_1 \geq 20 \text{ mm},$$

$$1 > d_1/d_2 \geq 0.7,$$

$$H \geq 30 \text{ mm, and}$$

$$1 \geq d_1/H \geq 0.3$$

wherein $d_1$ and $d_2$ are the inside and outside diameters of each rib at the root of the rib, i.e. the joint of the rib to the plate; and H is the length of each rib from the root to the front end.

$d_1$ smaller than 20 mm is not preferable because the resulting strength is small. The upper limit of $d_1$ is not particularly restricted. $d_1$ may vary depending upon the size of base plate, etc. $d_1$, even when too large, gives a low reinforcement effect in some cases; therefore, the upper limit of $d_1$ is generally about 80 mm, preferably about 60 mm.

When the ratio of the inside diameter and outside diameter of each rib, i.e. $d_1/d_2$ is smaller than 0.7, the thickness of each rib is larger than necessary as compared with the size of each rib, which results in increased weight of structure and fails to achieve a light weight. As the ratio $d_1/d_2$ approaches 1, the thickness of each rib becomes smaller. Too small a rib thickness, however, gives a low reinforcing effect; therefore, the ratio $d_1/d_2$ is preferably 0.98 or smaller.

The thickness of each rib may be the same at the root and at the front end, or may be smaller at the front end. The latter is preferable because of the productional advantage and the milder impact absorption.

In the latter case, it is preferable that the thickness of the rib decreases continuously from the root to the front end.

The present plastic-made reinforced structure shows an excellent reinforcing effect when it is a comparative large structure, i.e., H is 30 mm or more. Further, in the relationships between H and $d_1$ (the inside diameter of each rib), $1 \geq d_1/H \geq 0.3$ gives an excellent reinforcing effect. The ratio $d_1/H$ is preferably $1 \geq d_1/H \geq 0.4$, and more preferably $1 \geq d_1/H \geq 0.5$.

The thickness ($t_1$) of the thermoplastic resin-made plate and the thickness ($t_2$) of the rib at the root $[t_2 = (d_2 - d_1)/2]$ is preferably $15 \geq t_1 \geq 1$ (mm) and $1.5 \geq t_2/t_1$, and more preferably $10 \geq t_1 \geq 2$ (mm) and $0.8 \geq t_2/t_1$.

The number of ribs is at least one and generally two or more depending upon the size of the base plate. The number of ribs, the distance between ribs and the position of each rib are determined appropriately depending upon the size and shape of the base plate and the design strength of the reinforced structure to be produced.

The height, diameters and thickness of each rib are determined appropriately based on the respective design values which vary depending upon the application purpose of the reinforced structure, and accordingly are not particularly restricted.

Any auxiliary ribs connecting the cylindrical ribs may be provided as necessary, whereby a further reinforcing effect can be obtained.

The plastic-made reinforced structure of the present invention, as compared with conventional structures having rectangular box-shaped rib(s), can exhibit higher mechanical strengths at the same resin amount and can be used as a structure of light weight and yet excellent strength.

The present invention is hereinafter described by way of Examples. However, the present invention is not restricted to these Examples.

Example 1

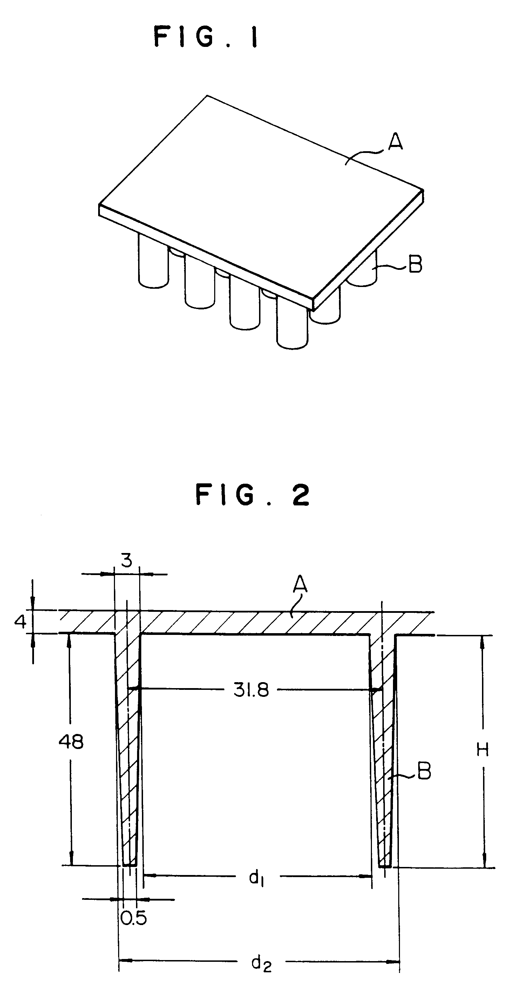

A polypropylene resin (Sumitomo Noblen AH 561, a product of SUMITOMO CHEMICAL CO., LTD.) of molten state was fed into the two dies of a press molding machine comprising male and female dies, while the two dies were in an open state. Then, clamping and cooling were applied in this order, whereby was obtained a plastic-made reinforced structure as shown in Fig. 1, which comprised a rectangular top plate of 300 mm x 400 mm x 4 mm (thickness) and 12 cylindrical ribs having a double-circle cross-sectional shape, connected perpendicularly to the plate, the ribs being arranged at equal intervals in three rows each consisting of four ribs. The cross section of each rib of the structure is shown in Fig. 2.

In the structure, the rib thickness at the root was 3 mm; the rib thickness at the front end was 0.5 mm; the rib diameter between the rib thickness centers was 31.8 mm; the rib height (H) was 48 mm; the ratio ($d_1/d_2$) of the rib inside diameter and the rib outside diameter was 0.83; and the ratio ($d_1/H$) of the rib inside diameter and the rib height was 0.6.

The resin amount of the structure was such that the resin amount of the top plate was 367 g, the resin amount of each one rib was 71.8 g and the total resin amount was 1,228.6 g.

The structure was placed on a flat iron plate so that the front end of each rib contacted with the iron plate. A pressure was applied uniformly to the whole area of the top plate of the structure from above the top plate towards the ribs at a rate of 100 mm per minute, to measure the primary buckling strength of the structure. The yield load of the structure was 1,310 kgf.

Comparative Example 1

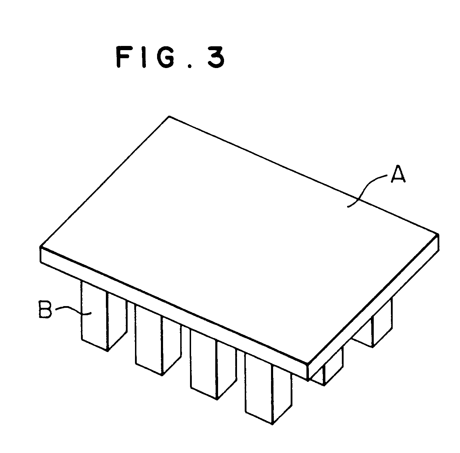

In the same manner as in Example 1, there was obtained a plastic-made reinforced structure as shown in Fig. 3, which comprised a rectangular top plate of 300 mm x 400 mm x 4 mm (thickness) and 12 box-shaped ribs having a square cross section, connected perpendicularly to the plate, the ribs being arranged at equal intervals in three rows each consisting of four ribs.

In the structure, the rib thickness at the root was 3 mm; the rib thickness at the front end was 0.5 mm; the distance between the rib thickness centers was 25 mm; and the rib height was 48 mm.

The resin amount of the structure was such that the resin amount of the top plate was 368 g, the resin amount of each one rib was 72.5 g and the total resin amount was 1,238 g.

The structure was measured for primary buckling strength in the same manner as in Example 1. The yield load of the structure was 950 kgf.

When comparing Example 1 and Comparative Example 1, even though each structure has approximately a same total resin amount, the plastic-made reinforced structure of the present invention remarkably shows an excellent yield load and gives an excellent effect for a plastic-made reinforced structure.

**Claims**

1. A plastic-made reinforced structure comprising a thermoplastic resin-made plate and cylindrical rib(s) made of the same resin as that of said plate, connected to at least one side of said plate perpendicularly to the side characterized in that the plate and the rib(s) form one piece, in which structure the following relationships hold:

$$d_1 \geq 20 \text{ mm},$$

$$1 > d_1/d_2 \geq 0.7,$$

$$H \geq 30 \text{ mm, and}$$

$$1 \geq d_1/H \geq 0.3$$

wherein $d_1$ and $d_2$ are the inside and outside diameters of each rib at the root of the rib, i.e. the joint of the rib to the plate; and H is the length of each rib from the root to the front end.

2. A plastic-made reinforced structure according to Claim 1, wherein the thickness of each rib at the front end is smaller than the thickness of each rib at the root.

3. A plastic-made reinforced structure according to Claim 1 or 2, wherein $d_1/d_2$ is as follows:

$$0.98 > d_1/d_2 \geq 0.7.$$

4. A plastic-made reinforced structure according to any one of Claims 1 to 3, wherein $d_1$ is as follows:

$$80 \geq d_1 \geq 20 \text{ mm}.$$

5. A plastic-made reinforced structure according to Claim 4, wherein $d_1$ is as follows:

$$60 \geq d_1 \geq 20 \text{ mm}.$$

6. A plastic-made reinforced structure according to any one of Claims 1 to 5, wherein $d_1/H$ is as follows:

$$1 \geq d_1/H \geq 0.4.$$

7. A plastic-made reinforced structure according to

Claim 6, wherein $d_1/H$ is as follows:

$$1 \geq d_1/H \geq 0.5.$$

## Patentansprüche

1. Verstärkte Kunststoffstruktur mit einer aus thermoplastischem Herz bestehenden Platte und einer oder mehreren zylinderförmigen Rippen, die aus dem gleichen Harz wie die Platte bestehen und senkrecht mit mindestens einer Seite der Platte verbunden sind, dadurch gekennzeichnet, daß die Platte und die Rippe(n) einstückig ausgebildet sind, wobei in der Struktur die folgenden Beziehungen gelten:

   $$d_1 \geq 20 \text{ mm},$$

   $$1 > d_1/d_2 \geq 0{,}7,$$

   $$H \geq 30 \text{ mm, und}$$

   $$1 \geq d_1/H \geq 0{,}3$$

   wobei $d_1$ und $d_2$ der Innen- und der Außendurchmesser jeder Rippe am Rippenfuß sind, d. h. an der Verbindungsstelle zwischen Rippe und Platte; und H die Länge jeder Rippe vom Rippenfuß bis zum Vorderende ist.

2. Verstärkte Kunststoffstruktur nach Anspruch 1, wobei die Dicke jeder Rippe am Vorderende geringer ist als die Dicke jeder Rippe am Fuß.

3. Verstärkte Kunststoffstruktur nach Anspruch 1 oder 2, wobei für $d_1/d_2$ gilt:

   $$0{,}98 > d_1/d_2 \geq 0{,}7.$$

4. Verstärkte Kunststoffstruktur nach einem der Ansprüche 1 bis 3, wobei für $d_1$ gilt:

   $$80 \geq d_1 \geq 20 \text{ mm}.$$

5. Verstärkte Kunststoffstruktur nach Anspruch 4, wobei für $d_1$ gilt:

   $$60 \geq d_1 \geq 20 \text{ mm}.$$

6. Verstärkte Kunststoffstruktur nach einem der Ansprüche 1 bis 5, wobei für $d_1/H$ gilt:

   $$1 \geq d_1/H \geq 0{,}4.$$

7. Verstärkte Kunststoffstruktur nach Anspruch 6, wobei für $d_1/H$ gilt:

   $$1 \geq d_1/H \geq 0{,}5.$$

## Revendications

1. Structure renforcée en plastique, comprenant une plaque en résine thermoplastique et une ou plusieurs nervures cylindriques constituées de la même résine que celle de ladite plaque, assemblée à au moins une face de ladite plaque, perpendiculairement à la face, caractérisée en ce que la plaque et la ou les nervures forment une seule pièce, dans laquelle la structure respecte les relations suivantes :

   $$d_1 \geq 20 \text{ mm},$$

   $$1 > d_1/d_2 \geq 0{,}7,$$

   $$H \geq 30 \text{ mm, et}$$

   $$1 \geq d_1/H \geq 0{,}3,$$

   où $d_1$ et $d_2$ représentent les diamètres, intérieur et extérieur, de chaque nervure au niveau de la racine de la nervure, c'est-à-dire le joint entre la nervure et la plaque ; et H est la longueur de chaque nervure, de la racine à l'extrémité frontale.

2. Structure renforcée en plastique selon la revendication 1, dans laquelle l'épaisseur de chaque nervure à l'extrémité frontale est plus petite que l'épaisseur de chaque nervure au niveau de la racine.

3. Structure renforcée en plastique selon la revendication 1 ou 2, dans laquelle $d_1/d_2$ satisfait à la relation suivante :

   $$0{,}98 > d_1/d_2 \geq 0{,}7.$$

4. Structure renforcée en plastique selon l'une quelconque des revendications 1 à 3, dans laquelle $d_1$ satisfait à la relation suivante :

   $$80 \geq d_1 \geq 20 \text{ mm}.$$

5. Structure renforcée en plastique selon la revendication 4, dans laquelle $d_1$ satisfait à la relation suivante :

   $$60 \geq d_1 \geq 20 \text{ mm}.$$

6. Structure renforcée en plastique selon l'une quelconque des revendications 1 à 5, dans laquelle $d_1/H$ satisfait à la relation suivante :

   $$1 \geq d_1/H \geq 0{,}4.$$

7. Structure renforcée en plastique selon la revendication 6, dans laquelle $d_1/H$ satisfait à la relation suivante :

   $$1 \geq d_1/H \geq 0{,}5.$$

# FIG. 1

# FIG. 2

FIG. 3